(19) Europäisches Patentamt

European Patent Office

Office européen des brevets

(11) **EP 0 876 011 A2**

(12) **EUROPÄISCHE PATENTANMELDUNG**

(43) Veröffentlichungstag:
**04.11.1998 Patentblatt 1998/45**

(51) Int. Cl.⁶: **H04B 10/10**

(21) Anmeldenummer: **98106134.4**

(22) Anmeldetag: **03.04.1998**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **28.04.1997 DE 19717926**

(71) Anmelder:
**TEMIC TELEFUNKEN microelectronic GmbH**
**74072 Heilbronn (DE)**

(72) Erfinder:
• **Angerstein, Jörg, Dr.**
  **74223 Flein (DE)**

• **Schairer, Werner, Dr.**
  **74189 Weinsberg (DE)**
• **Gfeller, Fritz, Dr.**
  **8803 Rüschlikin (CH)**
• **Hirt, Walter, Dr.**
  **8907 Wettswil (CH)**

(74) Vertreter:
**Maute, Hans-Jürgen, Dipl.-Ing.**
**Daimler-Benz Aktiengesellschaft,**
**FTP/H,**
**Postfach 35 35**
**74025 Heilbronn (DE)**

(54) **Optisches Sende- und -empfangsgerät zur drahtlosen Datenübertragung**

(57)     Bei diesen neuen oder umgebauten Transceivern zur drahtlosen Datenübertragung wird die Sendeeinheit und die Empfängereinheit derart aufgebaut bzw. bei bisherigen Transceiver verändert, daß die Abstrahlcharakteristik des Senders und die Empfindlichkeitscharakteristik des Empfängers oder zumindest der horizontale Abstrahlwinkel des Senders und der horizontale Öffnungswinkel des Empfängers identisch oder nahezu gleich sind. Bei der Anpassung der Abstrahl- und Öffnungswinkel bei bisherigen Transceivern werden rohrförmige Blenden zur Verkleinerung der Winkel eingesetzt oder zusätzliche Sende- oder Empfangsbauteile derart angebracht, daß sich der daraus resultierende Winkel vergrößert. Durch die Anpassung der Abstrahlcharakteristik auf die Empfindlichkeitscharakteristik wird die Paritätsforderung im Rahmen des geplanten AIR Standards erfüllt und so eine etwa 10-fache Erhöhung der Übertragungsweite erzielt.

FIG.1

**Beschreibung**

**Die Erfindung betrifft** einen Transceiver zur drahtlosen Datenübertragung gemäß dem Oberbegriff des Patentanspruches 1, und 2. Ein solcher Transceiver weist eine optische Sende- und Empfangseinheit auf, wobei die Signalintensität der Sendeeinheit und die Empfindlichkeit der Empfangseinheit richtungsabhängig sind und durch eine Abstrahlcharakteristik mit einem Abstrahlwinkel, bzw. durch eine Empfindlichkeitscharakteristik mit einem Öffnungswinkel beschrieben werden. Hierbei kann der Abstrahl- bzw. Öffnungswinkel auf der Horizontalen oder Vertikalen gemessen werden, so daß sich ein horizontaler und vertikaler Abstrahl- bzw. Öffnungswinkel ergibt. Bei rotationsymmetrischen Charakteristiken gilt:

Abstrahlwinkel = horizontaler Abstrahlwinkel = vertikaler Abstrahlwinkel.

Derartige Transceiver werden für IrDA-Anwendungen zum Einsatz gebracht. Zur Datenübertragung mittels einer optischen Punkt-zu-Punkt-Übertragungsstrecke wurde der IrDA (**I**nfrared **D**ata **A**ssociation) Standard entwickelt. Von der Firma TEMIC TELEFUNKEN microelectronic sind unter der Bezeichnung TFDS 6000 integrierte Transceiver Bausteine erhältlich, die dem IrDA-Standard entsprechen. In einem gemeinsamen Gehäuse sind ein Infrarotsender, ein Infrarotempfänger und ein integrierter Schaltkreis zur Signalaufbereitung angeordnet. Eine Oberflächenseite des Bausteins weist zwei linsenförmige Ausformungen auf, in deren Brennpunkt sich näherungsweise jeweils der Sender und der Empfänger befinden. Diese optischen Systeme sind notwendig, um die im IrDA-Standard geforderte gerichtete Signalabstrahlung des Senders und die gerichtete Empfindlichkeit des Empfängers zu erzielen. Der momentane IrDA Standard schreibt vor, daß der Abstrahlwinkel $\varphi_S$ des Sendesignals, einen Wert $\varphi_S > 15°$ hat, der sicher stellt, daß die Übertragungsweite in Verbindung mit der Empfängerempfindlichkeit mindestens 1 m beträgt. Eine weitere Forderung besteht darin, daß auch der Öffnungswinkel $\varphi_E$ des Empfängers, das heißt der ebene Winkel um den ein beleuchteter Empfänger gedreht werden kann bis sein Empfangssignal auf die Hälfte seines Maximalwertes abgesunken ist, mindestens $\varphi_E \geq \pm 15°$ betragen darf. Dieser Wert dient gleichfalls zur Sicherstellung der Übertragungsweite von 1 m. Verantwortlich für die Abstrahl- und Empfindlichkeitscharakteristik bzw. für die Größe des Abstrahl- bzw. Öffnungswinkels ist die Gehäuseform insbesondere die Form und Abmessungen der optischen Linse oder einer anderen Optik. Bei Transceivern kann z.B. der Abstrahlwinkel $\varphi_S \approx \pm 25°$ und der Öffnungswinkel $\varphi_E \approx \pm 60°$ betragen.

Die Begrenzung auf 1 m Übertragungsweite innerhalb eines Kegels von 15° kann im Rahmen einer Erweiterung des IrDA Standards (Advanced IR = AIR) aufgehoben werden. Diese Erweiterung beinhaltet eine sogenannte Paritätsforderung bezüglich Sender und Empfänger. Diese Parität ist dann gegeben, wenn der Quotient aus der Intensität $I_e$ [mW / sr] des Senders und der Empfindlichkeit des Detektors $E_e$ [µA / mW / cm$^2$] konstant ist und unter allen Betriebsbedingungen, die z.B. durch Temperaturen, Datenraten, Richtungen spezifiziert werden, konstant bleibt. Bei diesem erweiterten Standard ist es weiterhin nicht mehr zwingend notwendig, daß der Querschnitt des Kegels kreisförmig ist. Ein ellipsenförmiger Querschnitt des Kegels der Abstrahl- bzw. Empfindlichkeitscharakteristik ist ausreichend.

**Nachteilig** hierbei ist jedoch, daß bei einer Umrüstung auf den neuen AIR-Standard die Transceiver, die dem alten Standard genügen, also unterschiedliche Abstrahl- und Öffnungswinkel aufweisen, durch neue Transceiver ersetzt werden müssen. Bei einer Umrüstung müssen die alten Transceiver ausgebaut und die Neuen eingebaut werden. Auch können bereits produzierte Transceiver, die dem alten Standard genügen, nicht mehr verwendet werden, da sie gehäusebedingt unterschiedliche Winkel aufweisen.

**Der Erfindung liegt daher die Aufgabe zugrunde** mit einfachen Mitteln veraltete Transceiver umzurüsten, so daß sie trotz unterschiedlicher Abstrahl- bzw. Öffnungswinkel im Orginalzustand die Paritätsforderung erfüllen.

**Diese Aufgabe wird erfindungsgemäß durch die Merkmale in den Kennzeichen der Patentansprüche 1 und 2 gelöst.** Bei diesen Transceivern wird die Sendeeinheit und die Empfängereinheit durch eine am Gehäuse des Transceivers zusätzlich anbringbare Vorrichtung derart verändert, daß die Abstrahlcharakteristik des Senders und die Empfindlichkeitscharakteristik des Empfängers oder zumindest der horizontale bzw. der vertikale Abstrahlwinkel des Senders und der horizontale bzw. vertikale Öffnungswinkel des Empfängers gleich oder nahezu gleich sind.

**Die mit der Erfindung erzielten Vorteile** bestehen darin, daß neue Transceiver, die nach dem AIR Standard aufgebaut werden, eine wesentlich größere Übertragungsweite besitzen und die genaue Ausrichtung der kommunizierenden Geräte, die jeweils eine solchen Transceiver enthalten, entfällt. Auch können bisherige Transceiver durch preisgünstige Zusatzvorrichtungen auf den AIR Standard umgebaut und für den Betrieb bei keinem (ca. 25°) oder großem Öffnungs- bzw. Abstrahlwinkel (ca. 60°) umgerüstet werden. Diese Vorrichtungen können dann am Gehäuse sogar bei bereits eingebauten Transceivern angebracht werden.

Weitere vorteilhafte Weiterbildungen ergeben sich aus den Unteransprüchen. Hier werden die zusätzlich anbringbare Vorrichtungen beschrieben die an einem Transceicer, der die Paritätsbedingung nicht erfüllt, angebracht werden, so daß die Abstrahlcharakteristik auf die Empfindlichkeitscharakteristik abgestimmt werden kann und Sender und Empfänger den gleichen Öffnungs- bzw. Abstrahlwinkel erhalten. Dies kann durch eine röhrenförmige Blende erzielt werden, die einen Abstrahl- oder Öffnungswinkel verkleinert. Durch die Anbringung zusätzlicher Bauteile, die einen zusätzlicher Abstrahl- oder Öffnungswinkel aufweisen, kann zusammen mit dem Sender oder Empfänger des ursprünglichen Transceivers eine Vergrößerung des Abstrahl- bzw. des Öffnungswinkels erzielt werden.

Im folgenden soll die Erfindung anhand von **Ausführungsbeispielen** in Zusammenhang mit den Zeichnungen dargestellt werden.

**Figur 1:** AIR Transceiver
**Figur 2:** Bisheriger Transceiver mit Vorrichtung zur Verkleinerung des Abstrahl- bzw. Öffnungswinkels
**Figur 3:** Bisheriger Transceiver mit Vorrichtung zur Vergrößerung des Abstrahl- bzw. Öffnungswinkels

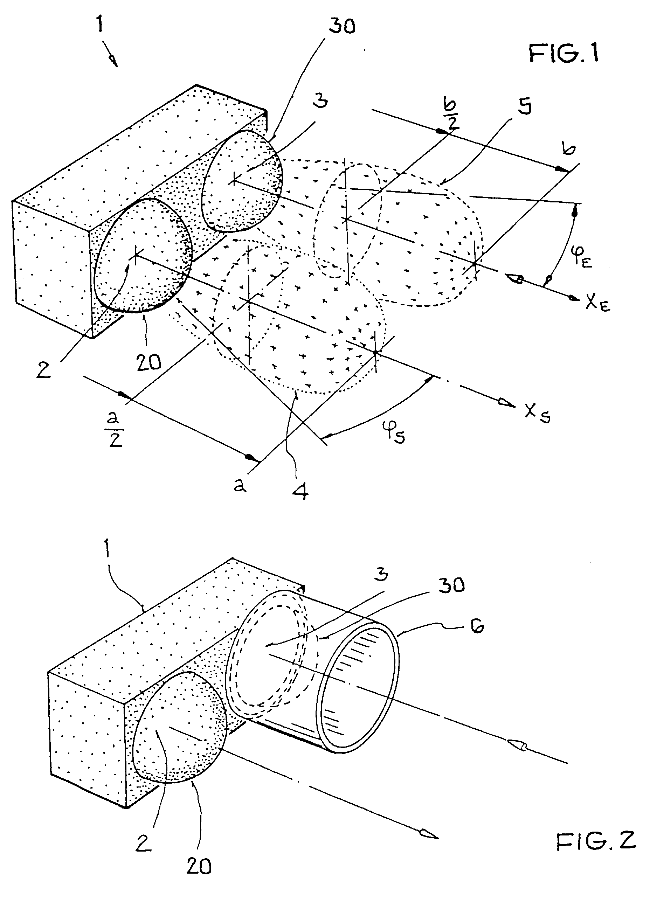

**Figur 1** zeigt einen Transceiver **1** der die Paritätsregel einhält. Das heißt, daß das Verhältnis zwischen der Intensität des Senders und der Empfindlichkeit des Empfängers bei allen Betriebsbedingungen konstant bleibt. Die Betriebsbedingungen werden im wesentlichen von Temperatur, Übertragungsraten und Richtung bestimmt. Dies bedeutet, daß das Temperaturverhalten von Sender und Empfänger gleich oder ähnlich sein muß. Diese Bedingung ist für Transceiver, die einen Halbleitersender und einen Halbleiterempfänger beinhalten näherungsweise erfüllt, da deren Temperaturverhalten gleich oder zumindest sehr ähnlich ist. Entsprechendes gilt für die Datenübertragungsrate. Das Verhalten bei diesen zwei Betriebsbedingungen ist im wesentlichen abhängig von den verwendeten Halbleitertechnologien. Die schwierigste Bedingung ist jedoch die Einhaltung des konstanten Quotienten von Signalintensität und Empfängerempfindlichkeit bei verschiedenen Raumrichtungen. Dabei können verschiedene Fälle auftreten. Bei der strengen Einhaltung der Paritätsregel ist es erforderlich, daß die gehäuseabhängige Abstrahlcharakteristik und die gehäuseabhängige Empfindlichkeitscharakteristik übereinstimmen. Die Mindestanforderung bei einer nicht so strengen Auslegung der Paritätsregel besteht darin, daß zumindest der horizontale bzw. vertikale Abstrahlwinkel (Messung des Abstrahlwinkels bezüglich der Horizontalen bzw. Vertikalen) gleich oder nahezu gleich dem horizontalen bzw. vertikalen Öffnungswinkel (Messung des Öffnungswinkels bezüglich der Horizontalen bzw. Vertikalen) ist. Der Hintergrund für diese Bedingung liegt darin, daß in der Regel die Justierung der kommunizierenden Geräte in der Horizontalen oder Vertikalen stattfindet. Befindent sich die kommunizierenden Geräte auf einem horizontalen Tisch so ist es zur Einhaltung der Parität - bei einer nicht so strengen Auslegung - aureichend, daß nur der horizontale Abstrahlwinkel gleich oder nahezu gleich ist wie der horizontale Öffnungswinkel. Im dargestellten Fall beinhaltet der Transceiver einen Halbleitersender **2** der zusammen mit einer Linse **20**, die geometrische Optik des Sendesystems bestimmt. Die Abmessungen und die Geometrie der Linse bestimmen zusammen mit dem Senderelement **2** die Abstrahlcharakteristik **4** der Anordnung und auch die Höhe des maximalen Wertes der Signalintensität. Die Form der Abstrahlcharakteristik **4** ist keulen- bis kugelförmig und hat in diesem Anwendungsbeispiel einen kreisrunden Querschnitt und ist somit rotationssymmetrisch. Sie zeigt die relative Signalintensität in Abhängigkeit von der Raumrichtung in Bezug auf die optische Achse $x_S$. Eine wichtige Größe zur Beschreibung der Abstrahlcharakteristik ist der Abstrahlwinkel $\varphi_S$, der den Raumwinkel relativ zur optischen Achse $x_S$ beschreibt an dem der relative Wert **a** der Signalintensität auf $\alpha*0{,}5$ abgesunken ist. Bei dem Abstrahlwinkel handelt es sich um den horizontalen Abstrahlwinkel, da er bezüglich der Horizontalen gemessen wird. In diesem Anwendungsbeispiel gilt: horizontaler Abstrahlwinkel = vertikaler Abstrahlwinkel . Desweiteren weist dieser Transceiver einen Halbleiterempfänger **3** auf, der zusammen mit einer Linse **30**, die geometrische Optik des Empfängersystems bestimmt. Die Abmessungen und die Geometrie der Linse **30** bestimmen zusammen mit dem Empfängerelement **3** die Empfindlichkeitscharakteristik **5** der Anordnung. Die Form der Empfindlichkeitscharakteristik **5** ist keulen- bis kreisförmig, hat einen kreisförmigen Querschnitt und ist rotationssymmetrisch. Sie zeigt die relative Höhe des Empfangssignals in Abhängigkeit von der Raumrichtung in Bezug auf die optische Achse $x_E$. Eine wichtige Größe zur Beschreibung der Empfindlichkeitscharakteristik ist der Öffnungswinkel $\varphi_E$, der den Raumwinkel relativ zur optischen Achse $x_E$ beschreibt an dem der relative Wert **b** des Empfangssignals auf die Hälfte $0{,}5\,b$ des relativen Maximalwertes abgesunken ist. Auch in dieser Abbildung wird der horizontale Öffnungswinkel gezeigt, der in dieser Abbildung gleich dem vertikalen Abstrahlwinkel ist, welcher nicht abgebildet wurde. Bei dieser Abbildung sind horizontaler Abstrahlwinkel $\varphi_S$ und horizontaler Öffnungswinkel $\varphi_E$ identisch. Diese sind wiederum identisch mit dem vertikalen Abstrahl- und Öffnungswinkel und die Abstrahlcharakteristik **4** stimmt mit der Empfindlichkeitscharakteristik **5** überein, so daß die Parität in allen Raumrichtungen gewährleistet ist.

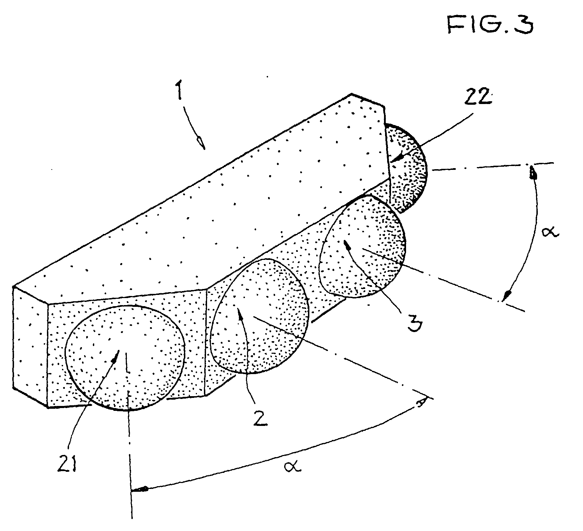

**Figur 2** zeigt einen Transceiver **1** mit einer Vorrichtung **6** zum Verkleinern des Abstrahlwinkels bzw. des Öffnungswinkels. Im dargestellten Fall wird die Empfindlichkeitscharakteristik des Empfängers **2** durch eine röhrchenförmige Blende **6** verändert. Dadurch verringert sich sowohl der vertikale als auch horizontale Öffnungswinkel. Wird diese Blende an der Seite oder oben und unten geschlitzt, so wird nur der vertikale oder horizontale Abstrahlwinkel bzw. Öffnungswinkel verändert. Bei geeigneter Wahl dieses Blendenröhrchens **6** kann die Empfindlichkeitscharakteristik derart verändert werden, daß sie mit der Abstrahlcharakteristik des Senders **2** übereinstimmt oder zumindest der horizontale Abstrahlwinkel und der horizontale Öffnungswinkel gleich oder nahezu gleich sind. Durch diese einfache Vorrichtung bleibt den Herstellern von Transceivern der Aufbau einer neuen Produktionslinie erspart. Auch können Anwender ihre bisherigen Transceiver mit einfachen Mitteln an den neuen AIR Standard anpassen. Die Vorrichtung **6** kann nachträglich durch einen Clip, Klebstoff oder andere Verbindungsmöglichkeit direkt am Transceivergehäuse **1** insbesondere an der Linse **30** befestigt werden. Auch kann sie seitliche Aussparungen aufweisen oder einen elliptischen oder rechtekkigen Querschnitt aufweisen, die dazu dienen nur den horizontalen oder den vertikalen Öffnungswinkel einzuengen. Die Montage einer derartigen Vorrichtung kann nicht nur am Transceivergehäuse **1** sondern sie kann auch direkt auf der Leiterplatte, auf welcher der Transceiver montiert ist, erfolgen. Wichtig bei der Montage ist nur, daß die röhrchenförmige Blende **6** nahe genug an die Linse **30** geführt wird, deren Abstrahlcharakteristik, bzw. Empfindlichkeitscharakteristik verändert werden soll. Im dargestellten Fall soll der Transceiver einen ursprünglichen Abstrahlwinkel von $\varphi_S$=25° und einen ursprünglichen Öffnungswinkel von $\varphi_E$=60° haben. Die ursprüngliche Abstrahlcharakteristik und der ursprüngliche Abstrahlwinkel des Senders mit $\varphi_S$=25° bleibt unverändert und wird durch die Vorrichtung **6** nicht beeinflußt. Die ursprüngliche Empfindlichkeitscharakteristik und der ursprüngliche Öffnungswinkel des Empfängers mit $\varphi_E$=60° wird durch das den Strahlengang einengende Röhrchen **6** verkleinert. Bei Messungen, bei denen der Innendurchmesser des Plastikröhrchen gleich dem Linsendurchmesser des Empfängers ist, zeigte sich folgender Sachverhalt: Ist die Röhrchenlänge 0,5 mm so reduziert sich der Öffnungswinkel auf $\varphi_E$=47° beträgt die Röhrchenlänge 1 mm so beträgt der neue Öffnungswinkel $\varphi_E$=43° bei 2 mm beträgt er $\varphi_E$=35° bei 3 mm beträgt er $\varphi_E$=28° bei 5 mm beträgt er 20° und bei 7 mm beträgt er $\varphi_E$=16° Ist nun der Innendurchmesser des schwarzen Plastikröhrchens gleich dem Linsendurchmesser des Empfängers **3** und beträgt die Röhrchenlänge ca. 4 mm, dann wird der ursprüngliche Öffnungswinkel auf $\varphi_E$=25° reduziert und die kugelförmige Empfindlichkeitscharakteristik wird enger und kegelförmiger. Der vertikale und horizontale Öffnungswinkel des Empfängers und der vertikale und horizontale Abstrahlwinkel des Senders **2** sind durch diese Vorrichtung **6** gleich groß und die Abstrahlcharakteristik ähnelt der Empfindlichkeitscharakteristik. Die Paritätsbedingung ist zumindest annähernd erfüllt.

Weiter Anwendungen ergeben sich bei anderen gängigen Transceiver mit anderen Abstrahl- und Öffnungswinkeln. Diese können durch eine Variation der Länge oder Form des Blendenröhrchens **6** solange verändert werden bis eine Übereinstimmung von horizontalem Abstrahl- und Öffnungswinkel gegeben ist. Eine solche die Optik einengende Vorrichtung kann bei Bedarf auch an der Senderlinse **20** angebracht werden.

**Figur 3** zeigt einen Transceiver **1** mit Vorrichtungen zum Vergrößern des Abstrahlwinkel bzw. des Öffnungswinkels. Im dargestellten Fall wird die Abstrahlcharakteristik des Senders **2** durch Hinzufügen weiterer Sendebauteile **21, 22** vergrößert. Bei geeigneter Anordnung der weiteren Sendeelemente **21, 22** kann die Abstrahlcharakteristik derart verändert werden, daß sie mit der Empfindlichkeitscharakteristik des Empfängers **3** übereinstimmt oder zumindest der horizontale Abstrahlwinkel und der horizontale Öffnungswinkel gleich oder nahezu gleich sind. Eine solche Vorrichtung wird vor allem dann benötigt, wenn ein Transceiver **1** nach dem bisherigen Standard den neuen Standard mit der Paritätsforderung erfüllen soll. Durch diese einfache Vorrichtung bleibt den Herstellern der Aufbau einer neuen Produktionslinie erspart. Die zusätzlichen Sendebauelemente **21, 22** können nachträglich durch einen Clip, oder andere Verbindungsmöglichkeit direkt am Transceivergehäuse **1** befestigt werden. Die Montage einer derartigen Vorrichtung kann nicht nur am Gehäuse sondern auch direkt auf der Leiterplatte, auf welcher der Transceiver **1** montiert ist, erfolgen. Hierbei können normale Sendebauelemente verwendet werden. Wichtig bei der Montage ist nur, daß die geometrische Anordnung der zusätzlichen Sendebausteine **21, 22** so ist, daß sich der horizontale Abstrahlwinkel des gesamten Systems, welcher aus den drei einzelnen (die beiden zusätzliche Sender und der im Transceiver vorhandene Sender) resultiert, zumindest annähernd den gleichen Wert annimmt wie der horizontale Öffnungswinkel auf der Empfängerseite. Wird bei dieser Anwendung z.B. das IrDA Modul verwendet so ergibt sich folgender Sachverhalt. Die ursprüngliche Empfindlichkeitscharakteristik und der ursprüngliche Öffnungswinkel des Empfängers mit $\varphi_E$=60° bleibt unverändert und wird durch die zusätzlichen Sendebausteine **21, 22** nicht beeinflußt. Die ursprüngliche Abstrahlcharakteristik mit dem ursprüngliche Abstrahlwinkel $\varphi_S$=25° wird bezüglich der Horizontalen durch die zusätzlich angebrachten Sendebausteine **21, 22** vergrößert. Bei den zusätzlichen Senderbausteine handelt es sich um die von der Firma TEMIC TELEFUNKEN microelectronic unter der Bezeichnung TSHF 5400 erhältlichen IR-Dioden mit einem Abstrahlwinkel $\varphi_{TSHF5400}$=25°. Beträgt der Winkel $\alpha$ zwischen den zusätzlich angebrachten Sendern und dem ursprünglichen Transceiver ca. $\alpha$ = 45°, dann ergibt sich ein aus den drei einzelnen Abstrahlwinkeln eines jeden Senders resultierender horizontaler Abstrahlwinkel von $\varphi_S$ = 60°. Der horizontale Öffnungswinkel des Empfängers **3** und der horizontale Abstrahlwinkel des Senders **2** sind durch diese Vorrichtung **6** gleich groß und die Abstrahlcharakteristik ähnelt der Empfindlichkeitscharakteristik. Die Paritätsbedingung ist zumindest annähernd erfüllt und die Übertragungsweite nach dem AIR Standard groß. Soll dagegen die Paritätsregel im strengeren Sinn erfüllt werden, kann zusätzlich der Empfänger **3** mit einer Blende, wie in Figur 2 dargestellt, versehen werden. Diese Blende sollte jedoch nur den vertikalen Öffnungswinkel des Empfängers verändern, so daß er den gleichen Wert annnimt wie der vertikale Abstrahlwinkel der Sendeeinheit. Eine derartige Blende ist an der Seite geschlitzt und nur oben und unten 4 mm lang. Die horizontale Empfindlichkeit würde durch die Vorrichtung nicht beeinflußt. Die vertikale Empfindlichkeit jedoch würde im Öffnungswinkel auf 25° eingeengt. Der Querschnitt der Abstrahl- und Empfindlichkeitskeule ist dann ellipsenförmig.

Weitere Anwendungen ergeben sich bei anderen gängigen Transceivern mit anderen Abstrahl- und Öffnungswinkeln. Diese können durch eine Variation der Abstrahlwinkel oder Anbringung der zusätzlich angebrachten Einzelbauteile solange verändert werden bis eine Übereinstimmung von Abstrahlcharakteristik und Empfindlichkeitscharakteristik bzw. Abstrahl- und Öffnungswinkel gegeben ist. Eine solche die Optik aufweitende Vorrichtung kann bei Bedarf auch mit zusätzlichen Empfängerbauteilen zur Aufweitung des Öffnungswinkels des Empfängers aufgebaut werden. Auch können die unter Figur 2 und unter Figur 3 beschriebenen Vorrichtungen gleichzeitig an einem Transceiver angebracht werden, so daß gleichzeitig der ursprüngliche Abstrahl- und Öffnungswinkel in horizontaler oder auch vertikaler Richtung verändert wird.

**Patentansprüche**

1. Transceiver (1) zur kabellosen Datenübertragung, bestehend aus einer, optoelektronischen Sende- und Empfangseinheit (2, 3), welche in einem gemeinsamen Gehäuse angeordnet sind, wobei die Signalintensität der Sendeeinheit (2) und die Empfindlichkeit (3) der Empfangseinheit richtungsabhängig sind und durch eine Abstrahlcharakteristik (4) mit einem bezüglich der Horizontalen oder Vertikalen gemessenen Abstrahlwinkel ($\varphi_S$), bzw. durch eine Empfindlichkeitscharakteristik (5), mit einem bezüglich der Horizontalen oder Vertikalen gemessenen Öffnungswinkel ($\varphi_E$), beschrieben werden, **dadurch gekennzeichnet, daß** der Transceiver (1) am gemeinsamen Gehäuse Sende- und Empfangseinheit (2, 3) eine zusätzlich anbringbare Vorrichtung (6) aufweist, die den ursprünglichen, gehäuseabhängigen horizontalen und/oder vertikalen Abstrahl-, bzw. Öffnungswinkel ($\varphi_S$, $\varphi_E$) der Sende- oder Empfangseinheit (2,3) verringert.

2. Transceiver (1) zur kabellosen Datenübertragung, bestehend aus einer, optoelektronischen Sende- und Empfangseinheit (2, 3), welche in einem gemeinsamen Gehäuse angeordnet sind, wobei die Signalintensität der Sendeeinheit (2) und die Empfindlichkeit (3) der Empfangseinheit richtungsabhängig sind und durch eine Abstrahlcharakteristik (4) mit einem bezüglich der Horizontalen oder Vertikalen gemessenen Abstrahlwinkel ($\varphi_S$), bzw. durch eine Empfindlichkeitscharakteristik (5), mit einem bezüglich der Horizontalen oder Vertikalen gemessenen Öffnungswinkel ($\varphi_E$), beschrieben werden, **dadurch gekennzeichnet, daß** der Transceiver (1) am gemeinsamen Gehäuse Sende- und Empfangseinheit (2,3) eine zusätzlich anbringbare Vorrichtung (21, 22) aufweist, die den ursprünglichen, gehäuseabhängigen horizontalen und/oder vertikalen Abstrahl- bzw. Öffnungswinkel ($\varphi_S$, $\varphi_E$) der Sende- oder Empfangseinheit (2,3) vergrößert.

3. Transceiver (1) nach Patentanspruch 2, **dadurch gekennzeichnet, daß** die zusätzlich anbringbare Vorrichtung (6) eine Blende ist, die insbesondere eine Röhrchenform aufweist.

4. Transceiver (1) nach Patentanspruch 3, **dadurch gekennzeichnet, daß** die zusätzlich anbringbare Vorrichtung ein weiteres optoelektronische Sende- oder Empfängerbauteile (21, 22) ist, welches räumlich derart angebracht ist, so daß es zusammen mit der ursprünglichen Sende- bzw. Empfangseinheit (1, 2) eine neue Sende- bzw. Empfangseinheit ausbilden, die einen vergrößerten horizontalen und/oder vertikalen Abstrahl- bzw. Öffnungswinkel ($\varphi_S$, $\varphi_E$) aufweist.

5. Transceiver nach Patentanspruch 4, **dadurch gekennzeichnet, daß** das Blendenröhrchen (6) den horizontalen und/oder vertikalen Abstrahl- oder Öffnungswinkel ($\varphi_S$, $\varphi_E$) der Sende- oder Empfängereinheit (2, 3) auf den Wert des horizontalen und/oder vertikalen Öffnungs- oder Abstrahlwinkels ($\varphi_E$, $\varphi_S$) der Empfänger- oder Sendeeinheit (3, 2) verringert und dadurch eine identische oder nahezu identische relative räumliche Abstrahl- und Empfindlichkeitsverteilung (4, 5) erzielt wird.

6. Transceiver (1) nach Patentanspruch 5, **dadurch gekennzeichnet, daß** der horizontale und/oder Abstrahl- oder Öffnungswinkel ($\varphi_S$, $\varphi_E$), der durch die Vorrichtung gebildeten neuen Sende- oder Empfängereinheit (2,3) genau so groß ist, wie der horizontale und/oder vertikale Öffnungs- oder Abstrahlwinkel ($\varphi_E$, $\varphi_S$) der Empfänger- oder Sendereinheit (3, 2) und dadurch eine identische oder nahezu identische relative räumliche Abstrahl- und Empfindlichkeitsverteilung (4, 5) erzielt wird.

7. Transceiver (1) nach Patentanspruch 2, wobei der horizontale und/oder vertikale Abstrahlwinkel ($\varphi_S$) ca. 25° beträgt, **dadurch gekennzeichnet, daß** der horizontale und/oder vertikale Öffnungswinkel ($\varphi_E$) der Empfängereinheit von ca. 60° auf ca. 25° reduziert wird und dadurch eine dentische oder nahezu identische relative räumliche Abstrahl- und Empfindlichkeitsverteilung (4,5) erzielt wird.

8. Transceiver nach Patentanspruch 3, wobei der horizontale und/oder vertikale Öffnungswinkel ($\varphi_E$) ca. 60° beträgt, **dadurch gekennzeichnet, daß** der horizontale und/oder vertikale Abstrahlwinkel von ca. 25° auf ca. 60° vergrößert wird und dadurch eine identische oder nahezu identische relative räumliche Abstrahl- und Empfindlichkeitsverteilung (4, 5) erzielt wird.

FIG.1

FIG.2

FIG.3